# EUROPEAN PATENT APPLICATION

(11) **EP 4 727 243 A1**
(43) Date of publication of application: **15.04.2026**
(21) Application number: 25207500.7
(22) Date of filing: 08.10.2025
(51) Int. Cl.: H04W 72/541, H04W 74/0808

(54) **ADJACENT CHANNEL INTERFERENCE WITH NON-PRIMARY CHANNEL ACCESS**

(30) Priority: 09.10.2024 US 202463705184 P; 21.10.2024 US 202463709674 P
(71) Applicant: INTEL Corporation, Santa Clara, CA 95054 (US)
(72) Inventor: CARIOU, Laurent, 29290 Milizac (FR)
(74) Representative: Viering, Jentschura & Partner mbB Patent- und Rechtsanwälte

(57) **Abstract**

This disclosure describes systems, methods, and devices related to cross-channel interference. A device may detect energy on a non-primary channel to identify adjacent channel interference. The device may adjust transmission parameters based on detected interference. The device may enable communication on available channels within a basic service set bandwidth.

## Description

### CROSS-REFERENCE TO RELATED APPLICATIONS

The present application claims priority to US Provisional Patent Application Ser. No. 63/705,184 filed on October 9, 2024 and US Provisional Patent Application Ser. No. 63/709,674 filed on October 21, 2024.

### TECHNICAL FIELD

This disclosure generally relates to systems and methods for wireless communications and, more particularly, to adjacent channel interference and bandwidth ambiguity with non-primary channel access (NPCA).

### BACKGROUND

Wireless devices are becoming widely prevalent and are increasingly requesting access to wireless channels. The Institute of Electrical and Electronics Engineers (IEEE) has been developing one or more standards to enable Radio Local Area Networking (RLAN). Third Generation Partnership Project (3GPP) cellular technologies also started supporting RLAN with introduction of Licensed Assisted Access (LAA) technology with LTE and later extended to New Radio (NR-U) with 5G New Radio (NR).

### BRIEF DESCRIPTION OF THE DRAWINGS

FIG. 1 is a network diagram illustrating an example network environment for cross-channel interference, in accordance with one or more example embodiments of the present disclosure.
FIG. 2 depicts an illustrative schematic diagram for cross-channel interference, in accordance with one or more example embodiments of the present disclosure.
FIG. 3 illustrates a flow diagram of a process for an illustrative cross-channel interference system, in accordance with one or more example embodiments of the present disclosure.
FIG. 4 illustrates a flow diagram of a process for an illustrative optimized channel access procedure system, in accordance with one or more example embodiments of the present disclosure.
FIG. 5 illustrates a functional diagram of an exemplary communication station that may be suitable for use as a user device, in accordance with one or more example embodiments of the present disclosure.
FIG. 6 illustrates a block diagram of an example machine upon which any of one or more techniques (e.g., methods) may be performed, in accordance with one or more example embodiments of the present disclosure.
FIG. 7 is a block diagram of a radio architecture in accordance with some examples.
FIG. 8 illustrates an example front-end module circuitry for use in the radio architecture of FIG. 7, in accordance with one or more example embodiments of the present disclosure.
FIG. 9 illustrates an example radio IC circuitry for use in the radio architecture of FIG. 7, in accordance with one or more example embodiments of the present disclosure.
FIG. 10 illustrates an example baseband processing circuitry for use in the radio architecture of FIG. 7, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Wi-Fi 8 (IEEE 802.11bn or ultra high reliability (UHR)) is the next generation of Wi-Fi and a successor to the IEEE 802.11be (Wi-Fi 7) standard. In line with all previous Wi-Fi standards, Wi-Fi 8 will aim to improve wireless performance in general along with introducing new and innovative features to further advance Wi-Fi technology.

Aspects described herein are related to i) adjacent channel interference with the NPCA; and/or ii) bandwidth ambiguity with the NPCA, noting that some aspects are related to the both. Some of the aspects which relates to the both may be referred to as common aspects from time to time herein.

The concept of NPCA in .11bn (Wi-Fi 8) is proposed.

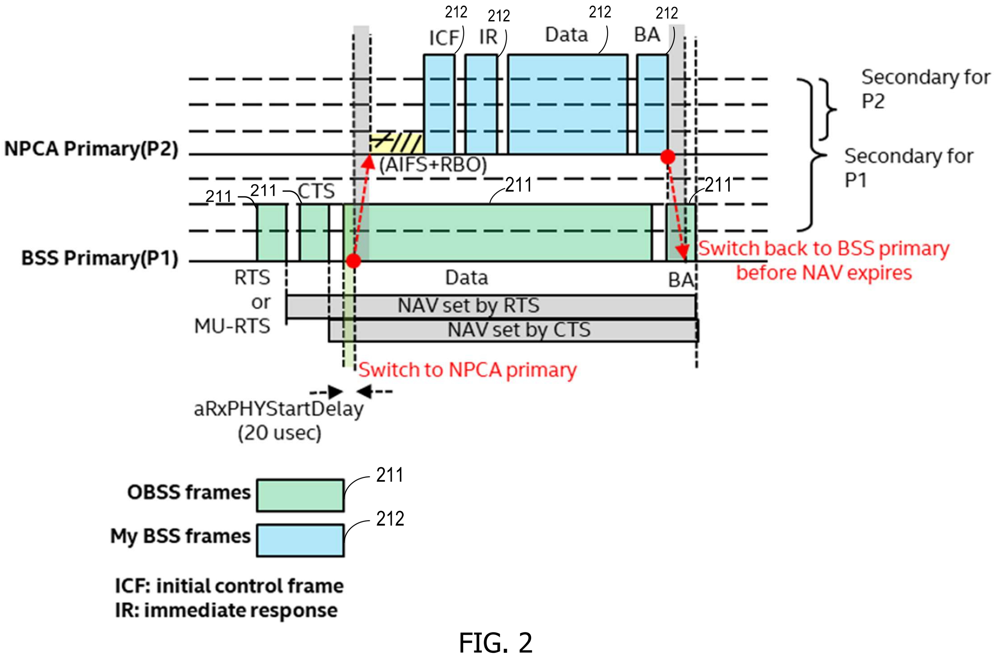

An NPCA STA/AP that moves to the NPCA primary channel will be allowed to use all the channels that are within the basic service set (BSS) bandwidth (BW), except the ones that are occupied by the overlapping BSS (OBSS) physical layer protocol data unit (PPDU) (211 in FIG. 2), even the channels that are immediately adjacent to the channel used by the OBSS PPDU.

In this disclosure, one or more solutions are proposed to deal with adjacent channel interference (ACI) generated by the NPCA STA on the OBSS ongoing transmission on the BSS primary channel.

Example embodiments of the present disclosure relate to systems, methods, and devices for adjacent channel interference with NPCA.

An advantage of the various embodiments may be to ensure good protection on OBSS transmission, when operation with NPCA.

When receiving an OBSS frame that indicates 320MHz, a receiving STA that is operating on a 320MHz channel doesn't know if the OBSS frame occupies the same 320MHz as the STA (and therefore occupied also the NPCA primary channel that is located in the secondary 160MHz) or occupies the other possible 320MHz that would also overlap with the primary channel of the STA and in which case would occupy only the primary 160MHz of the STA's 320MHz operating channel. In that latter case, the OBSS PPDU would not overlap with the NPCA primary channel that is within the secondary 160MHz of the BSS BW.

Example embodiments of the present disclosure relate to systems, methods, and devices for WiFi8 - Bandwidth ambiguity with NPCA.

In one embodiment, a optimized channel access system may facilitate solutions for how to operate in such case with NPCA.

If there is such ambiguity, the simplest solution is that the STA considers the worst case, meaning that it would then set the NAV for the entire 320MHz channel, even if the OBSS PPDU only occupies the primary 160MHz (because it occupies the 320MHz that is shifted by 160MHz and overlaps only on 160MHz with the STA's 320MHz channel), and in that case would consider that the OBSS PPDU occupies the entire BSS BW and overlaps with the NPCA primary channel. It would then not switch to the NPCA primary channel in that case.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

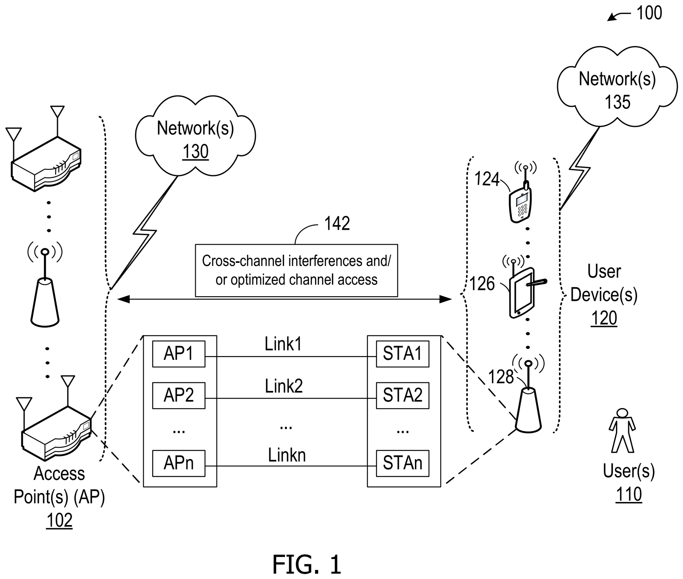

FIG. 1 is a network diagram illustrating an example network environment of cross-channel interference (relating to adjacent channel interference) and/or optimized channel access (relating to bandwidth ambiguity), according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

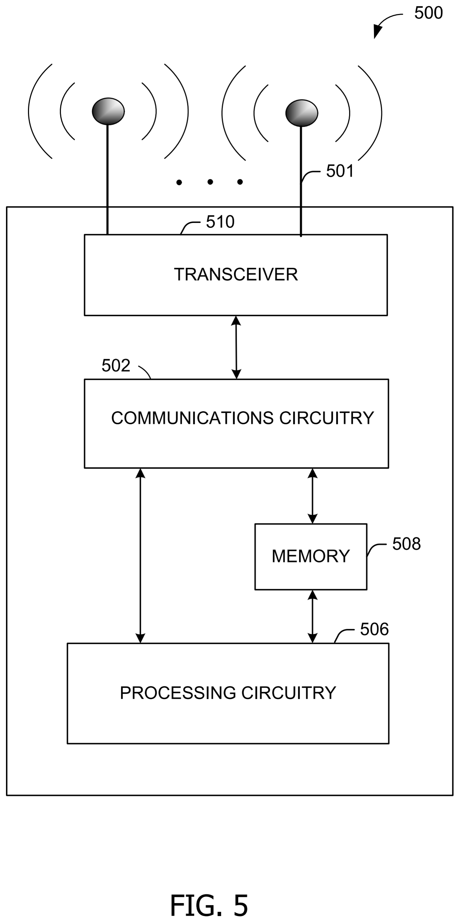

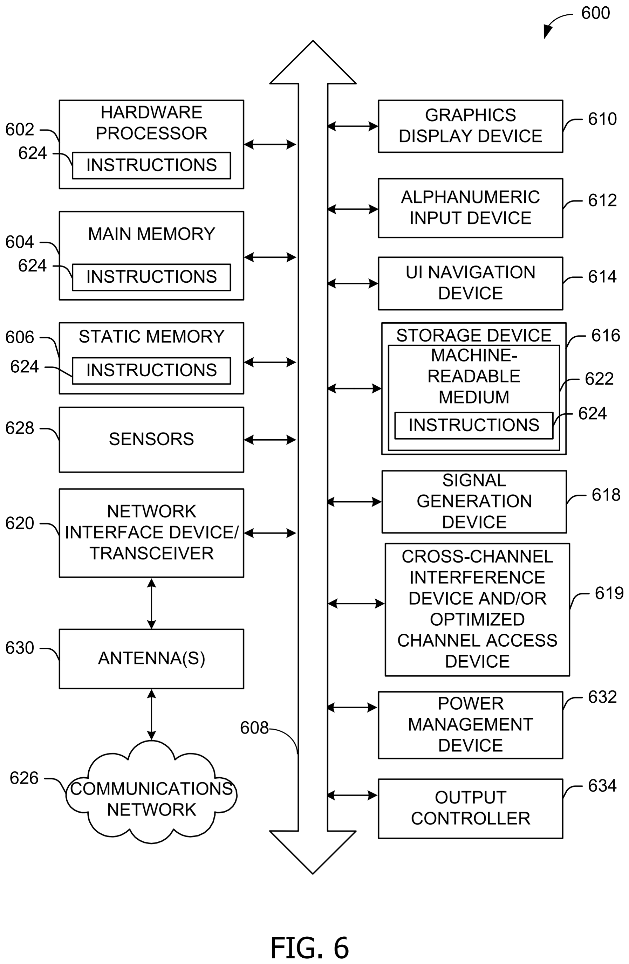

In some embodiments, the user devices 120 and the AP 102 may include one or more computer systems similar to that of the functional diagram of FIG. 5 and/or the example machine/system of FIG. 6.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, 802.11bn, etc.), 6 GHz channels (e.g., 802.11ax, 802.11be, 802.11bn, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a cross-channel interference 142 and/or an optimized channel access 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Linkl, Link2, ..., Linkn) between each of the individual APs and STAs. It is understood that the above descriptions are for the purposes of illustration and are not meant to be limiting.

FIG. 2 depicts an illustrative schematic diagram for cross-channel interference and channel optimized access, in accordance with one or more example embodiments of the present disclosure.

The concept of NPCA in .11bn (Wi-Fi 8) is proposed, which is illustrated in FIG. 2.

Aspects described herein are related to i) adjacent channel interference with the NPCA include the following:

An NPCA STA/AP that moves to the NPCA primary channel will be allowed to use all the channels that are within the BSS BW, except the ones that are occupied by the OBSS PPDU 211, even the channels that are immediately adjacent to the channel used by the OBSS PPDU.

In this disclosure a solution is proposed to deal with adjacent channel interference (ACI) generated by the NPCA STA on the OBSS ongoing transmission on the BSS primary channel.

In one embodiment, a cross-channel interference system may be according to a number of proposals:

Proposal number one. It is considered that an NPCA STA transmission on the NPCA primary channel that can occupy channels that are immediately adjacent to the channels used by the OBSS PPDU that includes the BSS primary channel are no different than the transmission of a STA that would be associated to an AP on adjacent channels and that would use the same channels. And therefore, it is proposed that NPCA transmissions should follow the same rules regarding ACI as baseline, meaning that it would operate solely based on Energy Detection (ED) on its own channel to detect the presence of an OBSS on the adjacent channel (detect the residual energy that the OBSS leaks on the adjacent channel because of imperfect spectral mask).

Proposal number two. In order to be a bit more protective, it is proposed to lower the ED threshold by 5 or 10 dB in order to be more protective by being more sensitive to detect an adjacent OBSS.

Proposal number three. It is also proposed that an NPCA STA shall check clear channel assessment (CCA) separately on each 20MHz channel that it plans on using, including the one that is the closest from the channel used by the OBSS PPDU, with a threshold of -62dBm or even -72dBm, so that it does not use the channel if it detects energy from the OBSS PPDU on the channel. With a mask rejection of between 20 and 24dB, that means that the ED detection on the adjacent channel allows to detect an OBSS PPDU that would be received on the OBSS channel at ED threshold-24dB.
so with ED threshold at -62dBm, detect a signal as low as -38dBm
so with ED threshold at -72dBm, detect a signal as low as -48dBm

Proposal number four. If it is considered to protect the OBSS transmission, with the same level of protection that it can enjoy if the STA would try and transmit on the current channel, then it is proposed to do the following.

The STA that transitions to NPCA channel because of the reception of an OBSS PPDU, it shall measure the RSSI of this OBSS PPDU

Then, based on the BW that the STA will use on the NPCA primary channel and where the NPCA BW will be located compared to the BW of the OBSS, it may be possible to calculate the mask rejection (at the center of the closest adjacent channel used by the OBSS) to estimate if the OBSS PPDU will be detected with ED on the adjacent channel or not. If it will not be detected for instance because the ED threshold is too low. In that case, it is proposed :

That the OBSS PPDU shall not transmit on the immediately adjacent channel (can still use all the other channels that are further away).

Of we propose to be forced to lower the transmit power by the different so that the interference generated is the same.

Similarly, if the STA has moved to NPCA PC because of initial control frame exchange from an OBSS (request to send (RTS) and clear to send (CTS) frames for instance), then the STA can measure the received signal strength indicator (RSSI) it received from the OBSS STA that sent the RTS and the OBSS STA that sent the CTS frame, and ensure that it will not transmit if it is going to create interference on both these STAs, using the calculations made under this proposal.

It is understood that the above descriptions are for the purposes of illustration and are not meant to be limiting.

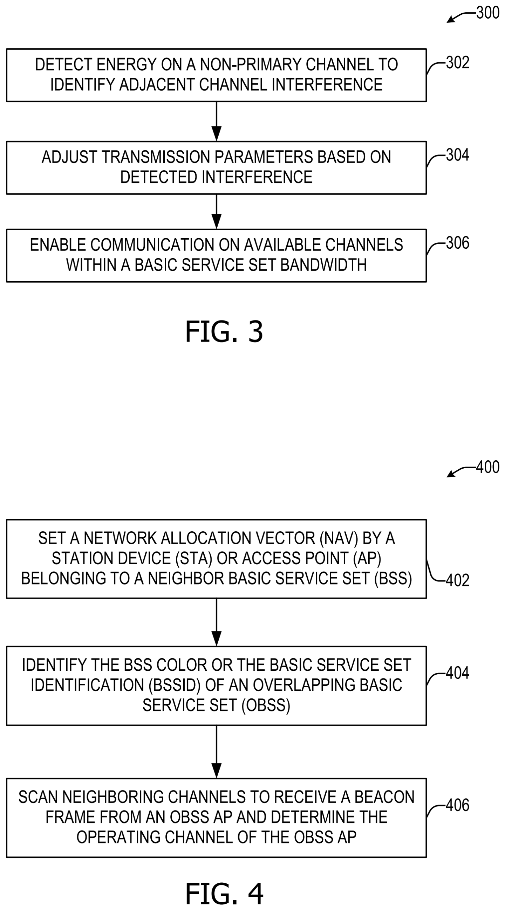

FIG. 3 illustrates a flow diagram of illustrative process 300 for a cross-channel interference system, in accordance with one or more example embodiments of the present disclosure.

At block 302, a device (e.g., the user device(s) 120 and/or the AP 102 of FIG. 1 and/or the cross-channel interference device 619 of FIG. 6) may detect energy on a non-primary channel to identify adjacent channel interference.

At block 304, the device may adjust transmission parameters based on detected interference.

At block 306, the device may enable communication on available channels within a basic service set bandwidth.

It is understood that the above descriptions are for the purposes of illustration and are not meant to be limiting.

Aspects described herein are related to i) bandwidth ambiguity with the NPCA include the following:

Referring back to FIG. 2, Basically, when receiving a PPDU from an OBSS on the BSS primary, the STA can move to the NPCA primary channel if the OBSS PPDU is recognized as an OBSS PPDU, and if the BW occupied by the OBSS doesn't overlap with the NPCA primary channel.

Most channels are non-overlapping so there are no ambiguity when receiving the OBSS PPDU by looking at the BW field to determine which channel(s) the OBSS PPDU occupies. However, at 2.4GHz, the 40MHz channels can be overlapping, and at 6GHz, the 320MHz channels can also be overlapping.

When receiving an OBSS frame that indicates 320MHz, a receiving STA that is operating on a 320MHz channel doesn't know if the OBSS frame occupies the same 320MHz as the STA (and therefore occupied also the NPCA primary channel that is located in the secondary 160MHz) or occupies the other possible 320MHz that would also overlap with the primary channel of the STA and in which case would occupy only the primary 160MHz of the STA's 320MHz operating channel. In that latter case, the OBSS PPDU would not overlap with the NPCA primary channel that is within the secondary 160MHz of the BSS BW.

In this disclosure, solutions are proposed for how to operate in such case with NPCA.

In one or more embodiments, the following solution is also proposed to provide a more optimized solution to resolve this ambiguity:
- The network allocation vector (NAV) is set by a station device (STA) or access point (AP) belonging to a neighbor basic service set (BSS) and the STA is able to know the BSS Color at least, and also the basic service set identification (BSSID) of the overlapping basic service set (OBSS). Based on scanning the neighboring channels, the STA can receive the beacon frame of the OBSS AP and know on which channel it operates (in this example, in which 320MHz channel it operates and whether it overlaps fully on the same 320MHz channel or overlaps only on 160MHz).
- When receiving a frame from a STA belonging to this neighbor BSS that indicates 320MHz, the STA can determine if the STA belongs to the neighbor BSS by looking if the RA or the TA field matches the BSSID or if the BSS color matches the BSS color of the OBSS and in that case, can classify the NAV as being either 160MHz (if it only partially overlaps) or 320MHz (if it fully overlaps).
   There is a need to make sure that both the NPCA STA and NPCA AP have that ability to determine if a 320MHz PPDU occupies the same 320MHz BW as the BSS BW or only the primary 160MHz.
- It is therefore proposed to either mandate that capability when supporting NPCA or to have a capability bit that would indicate whether the STA/AP supports identifying correctly the channels that are occupied by a 320MHz OBSS (obtained through scanning and identification of BSSID or BSS color).
- Another solution that is proposed here is that the AP can advertise to its associated NPCA STAs a report on the neighboring APs and on which channels they sit (OBSS BW of 320 MHz specifically) and therefore if they occupy the same 320 MHz channel as the AP or if they are shifted by 160 MHz and therefore not overlap with the secondary 160MHz of the AP. It is proposed that if an AP observes an OBSS PPDU of 320MHz, it shall identify the OBSS BSS BW and the channels they occupy, and report these channels to its associated STAs.

--There can be many ways to report that information, but a simple one is to include a neighbor report element to describe this OBSS with the BW and the primary channel.
--It is possible to also use the Reduced Neighbor Report that includes the primary channel of the OBSS and the BSSID.
--It is possible to also define a new element to include just the relevant useful information for this neighbor AP specifically for NPCA (so for instance in a container specific to NPCA (in the enablement frame sent to the STA, or in the association response frame or in beacon and probe responses. Useful information is:
---BSSID and/or BSS color of the OBSS
---Whether it has a BSS BW of 320MHz and whether the occupied 320MHz is the same as the AP's occupied 320MHz channel or if it is shifted by 160MHz and therefore overlaps only with the primary 160MHz with the AP.
--Thanks to that information, the associated STA will be able to determine thanks to the BSS Color or BSSID and the BW field set to 320MHz of a received OBSS PPDU whether the OBSS PPDU occupies the primary 160MHz or the entire 320MHz channel of the STA's BSS.

It is understood that the above descriptions are for the purposes of illustration and are not meant to be limiting.

FIG. 4 illustrates a flow diagram of illustrative process 400 for a optimized channel access system, in accordance with one or more example embodiments of the present disclosure.

At block 402, a device (e.g., the user device(s) 120 and/or the AP 102 of FIG. 1 and/or the optimized channel access device 619 of FIG. 6) may set a network allocation vector (NAV) by a station device (STA) or access point (AP) belonging to a neighbor basic service set (BSS).

At block 404, the device may identify the BSS Color or the basic service set identification (BSSID) of an overlapping basic service set (OBSS).

At block 406, the device may cause to scan neighboring channels to receive a beacon frame from an OBSS AP and determine the operating channel of the OBSS AP.

It is understood that the above descriptions are for the purposes of illustration and are not meant to be limiting.

Common aspects described herein include the following:

FIG. 5 shows a functional diagram of an exemplary communication station 500, in accordance with one or more example embodiments of the present disclosure. In one embodiment, FIG. 5 illustrates a functional block diagram of a communication station that may be suitable for use as an AP 102 (FIG. 1) or a user device 120 (FIG. 1) in accordance with some embodiments. The communication station 500 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 500 may include communications circuitry 502 and a transceiver 510 for transmitting and receiving signals to and from other communication stations using one or more antennas 501. The communications circuitry 502 may include circuitry that can operate the physical layer (PHY) communications and/or medium access control (MAC) communications for controlling access to the wireless medium, and/or any other communications layers for transmitting and receiving signals. The communication station 500 may also include processing circuitry 506 and memory 508 arranged to perform the operations described herein. In some embodiments, the communications circuitry 502 and the processing circuitry 506 may be configured to perform operations detailed in the above figures, diagrams, and flows.

In accordance with some embodiments, the communications circuitry 502 may be arranged to contend for a wireless medium and configure frames or packets for communicating over the wireless medium. The communications circuitry 502 may be arranged to transmit and receive signals. The communications circuitry 502 may also include circuitry for modulation/demodulation, upconversion/downconversion, filtering, amplification, etc. In some embodiments, the processing circuitry 506 of the communication station 500 may include one or more processors. In other embodiments, two or more antennas 501 may be coupled to the communications circuitry 502 arranged for sending and receiving signals. The memory 508 may store information for configuring the processing circuitry 506 to perform operations for configuring and transmitting message frames and performing the various operations described herein. The memory 508 may include any type of memory, including non-transitory memory, for storing information in a form readable by a machine (e.g., a computer). For example, the memory 508 may include a computer-readable storage device, read-only memory (ROM), random-access memory (RAM), magnetic disk storage media, optical storage media, flash-memory devices and other storage devices and media.

In some embodiments, the communication station 500 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 500 may include one or more antennas 501. The antennas 501 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 500 may include one or more of a keyboard, a display, a non-volatile memory port, multiple antennas, a graphics processor, an application processor, speakers, and other mobile device elements. The display may be an LCD screen including a touch screen.

Although the communication station 500 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 500 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 500 may include one or more processors and may be configured with instructions stored on a computer-readable storage device.

FIG. 6 illustrates a block diagram of an example of a machine 600 or system upon which any one or more of the techniques (e.g., methodologies) discussed herein may be performed. In other embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environments. The machine 600 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 600 may include a hardware processor 602 (e.g., a central processing unit (CPU), a graphics processing unit (GPU), a hardware processor core, or any combination thereof), a main memory 604 and a static memory 606, some or all of which may communicate with each other via an interlink (e.g., bus) 608. The machine 600 may further include a power management device 632, a graphics display device 610, an alphanumeric input device 612 (e.g., a keyboard), and a user interface (UI) navigation device 614 (e.g., a mouse). In an example, the graphics display device 610, alphanumeric input device 612, and UI navigation device 614 may be a touch screen display. The machine 600 may additionally include a storage device (i.e., drive unit) 616, a signal generation device 618 (e.g., a speaker), a cross-channel interference device and/or an optimized channel access device 619, a network interface device/transceiver 620 coupled to antenna(s) 630, and one or more sensors 628, such as a global positioning system (GPS) sensor, a compass, an accelerometer, or other sensor. The machine 600 may include an output controller 634, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 602 for generation and processing of the baseband signals and for controlling operations of the main memory 604, the storage device 616, and/or the cross-channel interference device and/or the optimized channel access device 619. The baseband processor may be provided on a single radio card, a single chip, or an integrated circuit (IC).

The storage device 616 may include a machine readable medium 622 on which is stored one or more sets of data structures or instructions 624 (e.g., software) embodying or utilized by any one or more of the techniques or functions described herein. The instructions 624 may also reside, completely or at least partially, within the main memory 604, within the static memory 606, or within the hardware processor 602 during execution thereof by the machine 600. In an example, one or any combination of the hardware processor 602, the main memory 604, the static memory 606, or the storage device 616 may constitute machine-readable media.

The cross-channel interference device and/or the optimized channel access device 619 may carry out or perform any of the operations and processes (e.g., process 300, process 400) described and shown above.

It is understood that the above are only a subset of what the cross-channel interference device and/or the optimized channel access device 619 may be configured to perform and that other functions included throughout this disclosure may also be performed by the cross-channel interference device and/or the optimized channel access device 619.

While the machine-readable medium 622 is illustrated as a single medium, the term "machine-readable medium" may include a single medium or multiple media (e.g., a centralized or distributed database, and/or associated caches and servers) configured to store the one or more instructions 624.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 600 and that cause the machine 600 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 624 may further be transmitted or received over a communications network 626 using a transmission medium via the network interface device/transceiver 620 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 620 may include one or more physical jacks (e.g., Ethernet, coaxial, or phone jacks) or one or more antennas to connect to the communications network 626. In an example, the network interface device/transceiver 620 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 600 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

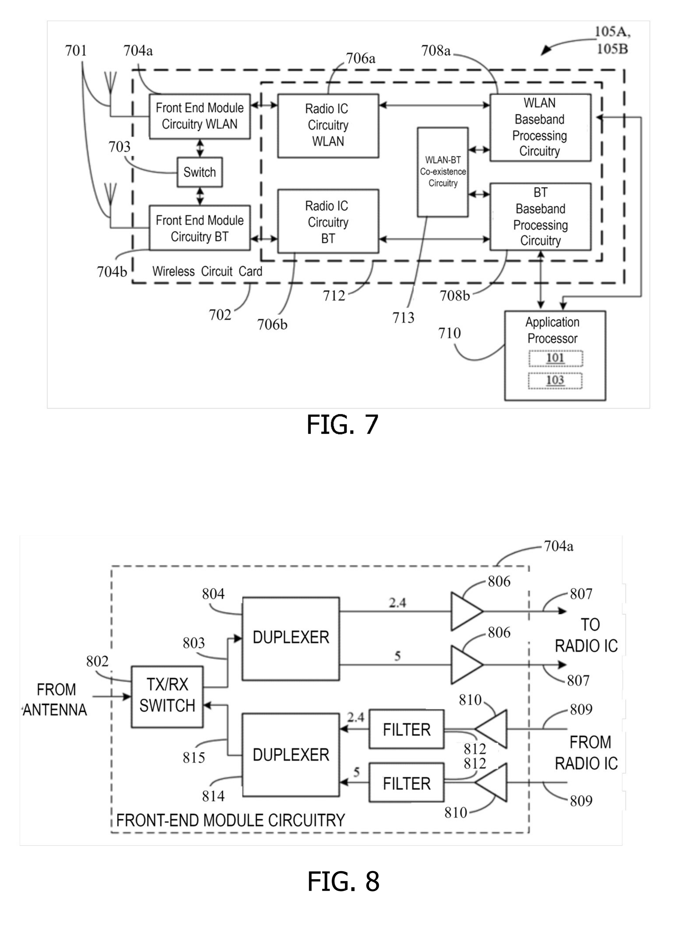

FIG. 7 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 704a-b, radio IC circuitry 706a-b and baseband processing circuitry 708a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 704a-b may include a WLAN or Wi-Fi FEM circuitry 704a and a Bluetooth (BT) FEM circuitry 704b. The WLAN FEM circuitry 704a may include a receive signal path comprising circuitry configured to operate on WLAN RF signals received from one or more antennas 701, to amplify the received signals and to provide the amplified versions of the received signals to the WLAN radio IC circuitry 706a for further processing. The BT FEM circuitry 704b may include a receive signal path which may include circuitry configured to operate on BT RF signals received from one or more antennas 701, to amplify the received signals and to provide the amplified versions of the received signals to the BT radio IC circuitry 706b for further processing. FEM circuitry 704a may also include a transmit signal path which may include circuitry configured to amplify WLAN signals provided by the radio IC circuitry 706a for wireless transmission by one or more of the antennas 701. In addition, FEM circuitry 704b may also include a transmit signal path which may include circuitry configured to amplify BT signals provided by the radio IC circuitry 706b for wireless transmission by the one or more antennas. In the embodiment of FIG. 7, although FEM 704a and FEM 704b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 706a-b as shown may include WLAN radio IC circuitry 706a and BT radio IC circuitry 706b. The WLAN radio IC circuitry 706a may include a receive signal path which may include circuitry to down-convert WLAN RF signals received from the FEM circuitry 704a and provide baseband signals to WLAN baseband processing circuitry 708a. BT radio IC circuitry 706b may in turn include a receive signal path which may include circuitry to down-convert BT RF signals received from the FEM circuitry 704b and provide baseband signals to BT baseband processing circuitry 708b. WLAN radio IC circuitry 706a may also include a transmit signal path which may include circuitry to up-convert WLAN baseband signals provided by the WLAN baseband processing circuitry 708a and provide WLAN RF output signals to the FEM circuitry 704a for subsequent wireless transmission by the one or more antennas 701. BT radio IC circuitry 706b may also include a transmit signal path which may include circuitry to up-convert BT baseband signals provided by the BT baseband processing circuitry 708b and provide BT RF output signals to the FEM circuitry 704b for subsequent wireless transmission by the one or more antennas 701. In the embodiment of FIG. 7, although radio IC circuitries 706a and 706b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 708a-b may include a WLAN baseband processing circuitry 708a and a BT baseband processing circuitry 708b. The WLAN baseband processing circuitry 708a may include a memory, such as, for example, a set of RAM arrays in a Fast Fourier Transform or Inverse Fast Fourier Transform block (not shown) of the WLAN baseband processing circuitry 708a. Each of the WLAN baseband circuitry 708a and the BT baseband circuitry 708b may further include one or more processors and control logic to process the signals received from the corresponding WLAN or BT receive signal path of the radio IC circuitry 706a-b, and to also generate corresponding WLAN or BT baseband signals for the transmit signal path of the radio IC circuitry 706a-b. Each of the baseband processing circuitries 708a and 708b may further include physical layer (PHY) and medium access control layer (MAC) circuitry, and may further interface with a device for generation and processing of the baseband signals and for controlling operations of the radio IC circuitry 706a-b.

Referring still to FIG. 7, according to the shown embodiment, WLAN-BT coexistence circuitry 713 may include logic providing an interface between the WLAN baseband circuitry 708a and the BT baseband circuitry 708b to enable use cases requiring WLAN and BT coexistence. In addition, a switch 703 may be provided between the WLAN FEM circuitry 704a and the BT FEM circuitry 704b to allow switching between the WLAN and BT radios according to application needs. In addition, although the antennas 701 are depicted as being respectively connected to the WLAN FEM circuitry 704a and the BT FEM circuitry 704b, embodiments include within their scope the sharing of one or more antennas as between the WLAN and BT FEMs, or the provision of more than one antenna connected to each of FEM 704a or 704b.

In some embodiments, the front-end module circuitry 704a-b, the radio IC circuitry 706a-b, and baseband processing circuitry 708a-b may be provided on a single radio card, such as wireless radio card 702. In some other embodiments, the one or more antennas 701, the FEM circuitry 704a-b and the radio IC circuitry 706a-b may be provided on a single radio card. In some other embodiments, the radio IC circuitry 706a-b and the baseband processing circuitry 708a-b may be provided on a single chip or integrated circuit (IC), such as IC 712.

In some embodiments, the wireless radio card 702 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 708b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 8 illustrates WLAN FEM circuitry 704a in accordance with some embodiments. Although the example of FIG. 8 is described in conjunction with the WLAN FEM circuitry 704a, the example of FIG. 8 may be described in conjunction with the example BT FEM circuitry 704b (FIG. 7), although other circuitry configurations may also be suitable.

In some embodiments, the FEM circuitry 704a may include a TX/RX switch 802 to switch between transmit mode and receive mode operation. The FEM circuitry 704a may include a receive signal path and a transmit signal path. The receive signal path of the FEM circuitry 704a may include a low-noise amplifier (LNA) 806 to amplify received RF signals 803 and provide the amplified received RF signals 807 as an output (e.g., to the radio IC circuitry 706a-b (FIG. 7)). The transmit signal path of the circuitry 704a may include a power amplifier (PA) to amplify input RF signals 809 (e.g., provided by the radio IC circuitry 706a-b), and one or more filters 812, such as band-pass filters (BPFs), low-pass filters (LPFs) or other types of filters, to generate RF signals 815 for subsequent transmission (e.g., by one or more of the antennas 701 (FIG. 7)) via an example duplexer 814.

In some dual-mode embodiments for Wi-Fi communication, the FEM circuitry 704a may be configured to operate in either the 2.4 GHz frequency spectrum or the 5 GHz frequency spectrum. In these embodiments, the receive signal path of the FEM circuitry 704a may include a receive signal path duplexer 804 to separate the signals from each spectrum as well as provide a separate LNA 806 for each spectrum as shown. In these embodiments, the transmit signal path of the FEM circuitry 704a may also include a power amplifier 810 and a filter 812, such as a BPF, an LPF or another type of filter for each frequency spectrum and a transmit signal path duplexer 804 to provide the signals of one of the different spectrums onto a single transmit path for subsequent transmission by the one or more of the antennas 701 (FIG. 7). In some embodiments, BT communications may utilize the 2.4 GHz signal paths and may utilize the same FEM circuitry 704a as the one used for WLAN communications.

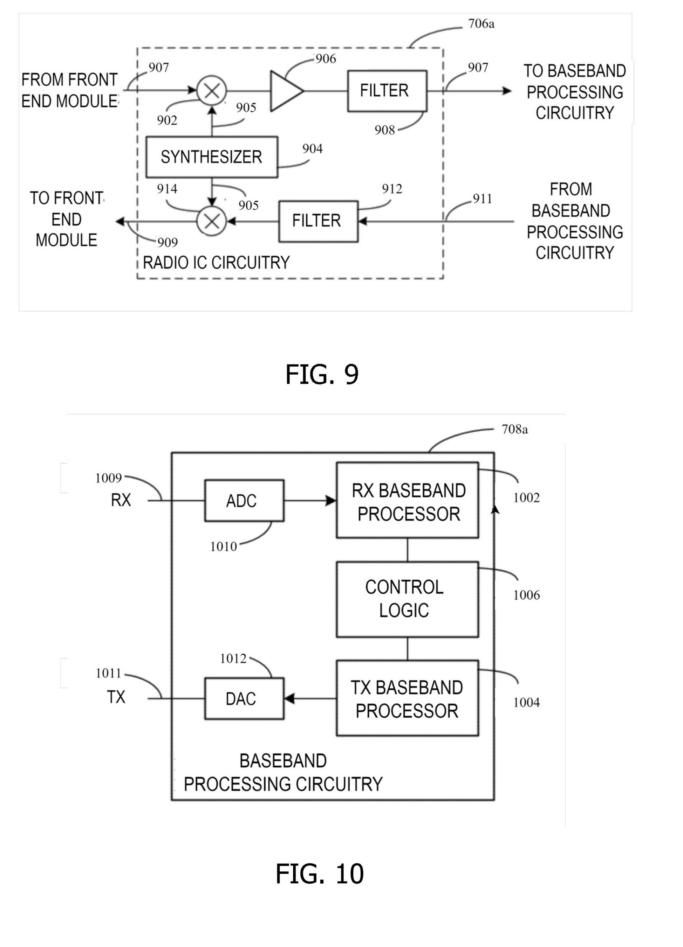

FIG. 9 illustrates radio IC circuitry 706a in accordance with some embodiments. The radio IC circuitry 706a is one example of circuitry that may be suitable for use as the WLAN or BT radio IC circuitry 706a/706b (FIG. 7), although other circuitry configurations may also be suitable. Alternatively, the example of FIG. 9 may be described in conjunction with the example BT radio IC circuitry 706b.

In some embodiments, the radio IC circuitry 706a may include a receive signal path and a transmit signal path. The receive signal path of the radio IC circuitry 706a may include at least mixer circuitry 902, such as, for example, down-conversion mixer circuitry, amplifier circuitry 906 and filter circuitry 908. The transmit signal path of the radio IC circuitry 706a may include at least filter circuitry 912 and mixer circuitry 914, such as, for example, up-conversion mixer circuitry. Radio IC circuitry 706a may also include synthesizer circuitry 904 for synthesizing a frequency 905 for use by the mixer circuitry 902 and the mixer circuitry 914. The mixer circuitry 902 and/or 914 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 9 illustrates only a simplified version of a radio IC circuitry, and may include, although not shown, embodiments where each of the depicted circuitries may include more than one component. For instance, mixer circuitry 914 may each include one or more mixers, and filter circuitries 908 and/or 912 may each include one or more filters, such as one or more BPFs and/or LPFs according to application needs. For example, when mixer circuitries are of the direct-conversion type, they may each include two or more mixers.

In some embodiments, mixer circuitry 902 may be configured to down-convert RF signals 807 received from the FEM circuitry 704a-b (FIG. 7) based on the synthesized frequency 905 provided by synthesizer circuitry 904. The amplifier circuitry 906 may be configured to amplify the down-converted signals and the filter circuitry 908 may include an LPF configured to remove unwanted signals from the down-converted signals to generate output baseband signals 907. Output baseband signals 907 may be provided to the baseband processing circuitry 708a-b (FIG. 7) for further processing. In some embodiments, the output baseband signals 907 may be zero-frequency baseband signals, although this is not a requirement. In some embodiments, mixer circuitry 902 may comprise passive mixers, although the scope of the embodiments is not limited in this respect.

In some embodiments, the mixer circuitry 914 may be configured to up-convert input baseband signals 911 based on the synthesized frequency 905 provided by the synthesizer circuitry 904 to generate RF output signals 809 for the FEM circuitry 704a-b. The baseband signals 911 may be provided by the baseband processing circuitry 708a-b and may be filtered by filter circuitry 912. The filter circuitry 912 may include an LPF or a BPF, although the scope of the embodiments is not limited in this respect.

In some embodiments, the mixer circuitry 902 and the mixer circuitry 914 may each include two or more mixers and may be arranged for quadrature down-conversion and/or up-conversion respectively with the help of synthesizer 904. In some embodiments, the mixer circuitry 902 and the mixer circuitry 914 may each include two or more mixers each configured for image rejection (e.g., Hartley image rejection). In some embodiments, the mixer circuitry 902 and the mixer circuitry 914 may be arranged for direct down-conversion and/or direct up-conversion, respectively. In some embodiments, the mixer circuitry 902 and the mixer circuitry 914 may be configured for super-heterodyne operation, although this is not a requirement.

Mixer circuitry 902 may comprise, according to one embodiment: quadrature passive mixers (e.g., for the in-phase (I) and quadrature phase (Q) paths). In such an embodiment, RF input signal 807 from FIG. 9 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 905 of synthesizer 904 (FIG. 9). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 807 (FIG. 8) may comprise a balanced signal, although the scope of the embodiments is not limited in this respect. The I and Q baseband output signals may be provided to low-noise amplifier, such as amplifier circuitry 906 (FIG. 9) or to filter circuitry 908 (FIG. 9).

In some embodiments, the output baseband signals 907 and the input baseband signals 911 may be analog baseband signals, although the scope of the embodiments is not limited in this respect. In some alternate embodiments, the output baseband signals 907 and the input baseband signals 911 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 904 may be a fractional-N synthesizer or a fractional N/N+1 synthesizer, although the scope of the embodiments is not limited in this respect as other types of frequency synthesizers may be suitable. For example, synthesizer circuitry 904 may be a delta-sigma synthesizer, a frequency multiplier, or a synthesizer comprising a phase-locked loop with a frequency divider. According to some embodiments, the synthesizer circuitry 904 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 904 may be provided by a voltage controlled oscillator (VCO), although that is not a requirement. A divider control input may further be provided by either the baseband processing circuitry 708a-b (FIG. 7) depending on the desired output frequency 905. In some embodiments, a divider control input (e.g., N) may be determined from a look-up table (e.g., within a Wi-Fi card) based on a channel number and a channel center frequency as determined or indicated by the example application processor 710. The application processor 710 may include, or otherwise be connected to, one of the example secure signal converter 101 or the example received signal converter 103 (e.g., depending on which device the example radio architecture is implemented in).

In some embodiments, synthesizer circuitry 904 may be configured to generate a carrier frequency as the output frequency 905, while in other embodiments, the output frequency 905 may be a fraction of the carrier frequency (e.g., one-half the carrier frequency, one-third the carrier frequency). In some embodiments, the output frequency 905 may be a LO frequency (fLO).

FIG. 10 illustrates a functional block diagram of baseband processing circuitry 708a in accordance with some embodiments. The baseband processing circuitry 708a is one example of circuitry that may be suitable for use as the baseband processing circuitry 708a (FIG. 7), although other circuitry configurations may also be suitable. Alternatively, the example of FIG. 9 may be used to implement the example BT baseband processing circuitry 708b of FIG. 7.

The baseband processing circuitry 708a may include a receive baseband processor (RX BBP) 1002 for processing receive baseband signals 909 provided by the radio IC circuitry 706a-b (FIG. 7) and a transmit baseband processor (TX BBP) 1004 for generating transmit baseband signals 911 for the radio IC circuitry 706a-b. The baseband processing circuitry 708a may also include control logic 1006 for coordinating the operations of the baseband processing circuitry 708a.

In some embodiments (e.g., when analog baseband signals are exchanged between the baseband processing circuitry 708a-b and the radio IC circuitry 706a-b), the baseband processing circuitry 708a may include ADC 1010 to convert analog baseband signals 1009 received from the radio IC circuitry 706a-b to digital baseband signals for processing by the RX BBP 1002. In these embodiments, the baseband processing circuitry 708a may also include DAC 1012 to convert digital baseband signals from the TX BBP 1004 to analog baseband signals 1011.

In some embodiments that communicate OFDM signals or OFDMA signals, such as through baseband processor 708a, the transmit baseband processor 1004 may be configured to generate OFDM or OFDMA signals as appropriate for transmission by performing an inverse fast Fourier transform (IFFT). The receive baseband processor 1002 may be configured to process received OFDM signals or OFDMA signals by performing an FFT. In some embodiments, the receive baseband processor 1002 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 7, in some embodiments, the antennas 701 (FIG. 7) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 701 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multi-standard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: detect energy on a non-primary channel to identify adjacent channel interference; adjust transmission parameters based on detected interference; and enable communication on available channels within a basic service set bandwidth.

Example 2 may include the device of example 1 and/or some other example herein, wherein the processing circuitry may be further configured to prioritize channels with lower interference levels.

Example 3 may include the device of example 1 and/or some other example herein, wherein the processing circuitry may be further configured to switch channels to maintain optimal communication.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send the frame.

Example 6 may include a non-transitory computer-readable medium storing computer-executable instructions which when executed by one or more processors result in performing operations comprising: detecting energy on a non-primary channel to identify adjacent channel interference; adjusting transmission parameters based on detected interference; and enabling communication on available channels within a basic service set bandwidth.

Example 7 may include the non-transitory computer-readable medium of example 6 and/or some other example herein, wherein the operations further comprise prioritizing channels with lower interference levels.

Example 8 may include the non-transitory computer-readable medium of example 6 and/or some other example herein, wherein the operations further comprise switching channels to maintain optimal communication.

Example 9 may include a method comprising: detecting energy on a non-primary channel to identify adjacent channel interference; adjusting transmission parameters based on detected interference; and enabling communication on available channels within a basic service set bandwidth.

Example 10 may include the method of example 9 and/or some other example herein, further comprising prioritizing channels with lower interference levels.

Example 11 may include the method of example 9 and/or some other example herein, further comprising switching channels to maintain optimal communication.

Example 12 may include an apparatus comprising means for: detecting energy on a non-primary channel to identify adjacent channel interference; adjusting transmission parameters based on detected interference; and enabling communication on available channels within a basic service set bandwidth.

Example 13 may include the apparatus of example 12 and/or some other example herein, further comprising prioritizing channels with lower interference levels.

Example 14 may include the apparatus of example 12 and/or some other example herein, further comprising switching channels to maintain optimal communication.

Example 15 may include a device comprising processing circuitry coupled to storage, the processing circuitry configured to: set a network allocation vector (NAV) by a station device (STA) or access point (AP) belonging to a neighbor basic service set (BSS); identify the BSS Color or the basic service set identification (BSSID) of an overlapping basic service set (OBSS); and cause to scan neighboring channels to receive a beacon frame from an OBSS AP and determine the operating channel of the OBSS AP.

Example 16 may include the device of example 15 and/or some other example herein, wherein the processing circuitry may be further configured to determine whether the OBSS AP operates on a fully overlapping 320MHz channel or partially overlaps on a 160MHz channel.

Example 17 may include the device of example 15 and/or some other example herein, wherein the processing circuitry may be further configured to optimize channel access by resolving bandwidth ambiguity based on identification of overlapping channels and basic service set parameters.

Example 18 may include the device of example 15 and/or some other example herein, further comprising a transceiver configured to transmit and receive wireless signals.

Example 19 may include the device of example 19 and/or some other example herein, further comprising an antenna coupled to the transceiver to cause to send the frame.

Example 20 may include a non-transitory computer-readable medium storing computer-executable instructions which when executed by one or more processors result in performing operations comprising: setting a network allocation vector (NAV) by a station device (STA) or access point (AP) belonging to a neighbor basic service set (BSS); identifying the BSS Color or the basic service set identification (BSSID) of an overlapping basic service set (OBSS); and causing to scan neighboring channels to receive a beacon frame from an OBSS AP and determine the operating channel of the OBSS AP.

Example 21 may include the non-transitory computer-readable medium of example 20 and/or some other example herein, wherein the operations further comprise determining whether the OBSS AP operates on a fully overlapping 320MHz channel or partially overlaps on a 160MHz channel.

Example 22 may include the non-transitory computer-readable medium of example 20 and/or some other example herein, wherein the operations further comprise optimize channel access by resolving bandwidth ambiguity based on identification of overlapping channels and basic service set parameters.

Example 23 may include a method comprising: setting a network allocation vector (NAV) by a station device (STA) or access point (AP) belonging to a neighbor basic service set (BSS); identifying the BSS Color or the basic service set identification (BSSID) of an overlapping basic service set (OBSS); and causing to scan neighboring channels to receive a beacon frame from an OBSS AP and determine the operating channel of the OBSS AP.

Example 24 may include the method of example 23 and/or some other example herein, further comprising determining whether the OBSS AP operates on a fully overlapping 320MHz channel or partially overlaps on a 160MHz channel.

Example 25 may include the method of example 23 and/or some other example herein, further comprising optimize channel access by resolving bandwidth ambiguity based on identification of overlapping channels and basic service set parameters.

Example 26 may include an apparatus comprising means for: setting a network allocation vector (NAV) by a station device (STA) or access point (AP) belonging to a neighbor basic service set (BSS); identifying the BSS Color or the basic service set identification (BSSID) of an overlapping basic service set (OBSS); and causing to scan neighboring channels to receive a beacon frame from an OBSS AP and determine the operating channel of the OBSS AP.

Example 27 may include the apparatus of example 26 and/or some other example herein, further comprising determining whether the OBSS AP operates on a fully overlapping 320MHz channel or partially overlaps on a 160MHz channel.

Example 28 may include the apparatus of example 26 and/or some other example herein, further comprising optimize channel access by resolving bandwidth ambiguity based on identification of overlapping channels and basic service set parameters.

Example 29 may include the device of example 1, wherein the device is a station, STA, or access point, AP, configured for non-primary channel access, NPCA, and wherein the processing circuitry is configured to detect the energy in response to detecting a transmission from an overlapping basic service set, OBSS, on a BSS primary channel and preparing to transmit on the non-primary channel, wherein the non-primary channel is an NPCA primary channel.

Example 30 may include the device of example 29, wherein the NPCA primary channel is immediately adjacent to a channel occupied by the transmission from the OBSS.

Example 31 may include the device of example 30, wherein the processing circuitry is further configured to defer a transmission on the NPCA primary channel based on an energy detection measurement performed on the NPCA primary channel.

Example 32 may include the device of example 31, wherein the energy detection measurement is performed using a predetermined energy detection, ED, threshold for a clear channel assessment, CCA, wherein the predetermined ED threshold is a baseline threshold applicable to non-NPCA transmissions.

Example 33 may include the device of example 31, wherein the processing circuitry is further configured to defer the transmission on the NPCA primary channel if detected energy exceeds a lowered ED threshold that is lower than a baseline threshold applicable to non-NPCA transmissions.

Example 34 may include the device of example 33, wherein the lowered ED threshold is 5 dB or 10 dB lower than the baseline threshold.

Example 35 may include the device of example 30, wherein the NPCA primary channel comprises a plurality of 20MHz channels, and the processing circuitry is configured to check clear channel assessment, CCA, separately on each 20MHz channel that the device plans on using, including the 20MHz channel that is closest to the channel occupied by the transmission from the OBSS.

Example 36 may include the device of example 35, wherein adjusting transmission parameters comprises not using a 20MHz channel if energy from the OBSS transmission is detected on that 20MHz channel.

Example 37 may include the device of example 35 or 36, wherein the CCA is checked using a threshold of -62dBm or -72dBm.

Example 38 may include the device of example 30, wherein the processing circuitry is further configured to measure a received signal strength indicator, RSSI, of the transmission from the OBSS.

Example 39 may include the device of example 38, wherein the processing circuitry is further configured to calculate, based on the RSSI and a mask rejection value, whether the transmission from the OBSS is detectable with a predetermined ED threshold on the NPCA primary channel.

Example 40 may include the device of example 39, wherein if the transmission from the OBSS is calculated to not be detectable by the predetermined ED threshold, the processing circuitry is further configured to perform at least one of: prohibiting a transmission on a channel immediately adjacent to the channel occupied by the transmission from the OBSS or lowering a transmit power of a transmission on the NPCA primary channel.

Example 41 may include the device of example 15, wherein the determination of the operating channel is to resolve an ambiguity for a non-primary channel access, NPCA, procedure, the ambiguity arising from a received transmission from the OBSS on a 320MHz channel.

Example 42 may include the device of example 41, wherein the processing circuitry is further configured to determine, based on the determined operating channel of the OBSS AP, whether the transmission from the OBSS fully overlaps with an operating channel of the device or only partially overlaps.

Example 43 may include the device of example 42, wherein the processing circuitry is further configured to classify the network allocation vector, NAV, as covering 160MHz if the overlap is partial, or as covering 320MHz if the overlap is full.

Example 44 may include the device of any one of examples 15 to 43, wherein the processing circuitry is configured to determine that a received frame belongs to the OBSS by matching a receiver address, RA, or transmitter address, TA, field in the received frame with the BSSID of the OBSS, or by matching a BSS color in the received frame with the BSS Color of the OBSS.

Example 45 may include the device of any one of examples 15 to 44, wherein the processing circuitry is further configured to indicate a capability of the device to identify the operating channel of the OBSS AP via a capability bit.

Example 46 may include a device, the device comprising processing circuitry coupled to storage, the processing circuitry configured to: identify, in response to observing a transmission from an overlapping basic service set, OBSS, on a 320MHz channel, a channel occupancy of the OBSS; and transmit a report to one or more associated stations, STAs, the report indicating the channel occupancy of the OBSS to enable the one or more STAs to perform a non-primary channel access, NPCA, procedure.

Example 47 may include the device of example 46, wherein the report comprises a neighbor report element.

Example 48 may include the device of example 46, wherein the report comprises a Reduced Neighbor Report element.

Example 49 may include the device of any one of examples 46 to 48, wherein the report is transmitted in an enablement frame, an association response frame, a beacon frame, or a probe response frame.

Example 50 may include the device of any one of examples 46 to 49, wherein the report indicates whether the occupied 320MHz channel of the OBSS is the same as an occupied 320MHz channel of the device or is shifted by 160MHz.

Example 51 may include a device, the device comprising processing circuitry coupled to storage, the processing circuitry configured to: receive a transmission from an overlapping basic service set, OBSS, the transmission indicating a 320MHz bandwidth involving an overlap with a non-primary channel access, NPCA, channel; and in response to the transmission, set a network allocation vector, NAV, for an entire 320MHz channel and refrain from switching to the NPCA channel.

Example 52 may include one or more non-transitory computer-readable media comprising instructions to cause an electronic device, upon execution of the instructions by one or more processors of the electronic device, to perform one or more elements of a method described in or related to any of examples 1-51, or any other method or process described herein.

Example 53 may include an apparatus comprising logic, modules, and/or circuitry to perform one or more elements of a method described in or related to any of examples 1-51, or any other method or process described herein.

Example 54 may include a method, technique, or process as described in or related to any of examples 1-51, or portions or parts thereof.

Example 55 may include an apparatus comprising: one or more processors and one or more computer readable media comprising instructions that, when executed by the one or more processors, cause the one or more processors to perform the method, techniques, or process as described in or related to any of examples 1-51, or portions thereof.

Example 56 may include a method of communicating in a wireless network as shown and described herein.

Example 57 may include a system for providing wireless communication as shown and described herein.

Example 58 may include a device for providing wireless communication as shown and described herein.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device, the device comprising processing circuitry coupled to storage, the processing circuitry configured to:
detect energy on a non-primary channel to identify adjacent channel interference;
adjust transmission parameters based on detected interference; and
enable communication on available channels within a basic service set bandwidth.

2. The device of claim 1, wherein the device is a station, STA, or access point, AP, configured for non-primary channel access, NPCA, and wherein the processing circuitry is configured to detect the energy in response to detecting a transmission from an overlapping basic service set, OBSS, on a BSS primary channel and preparing to transmit on the non-primary channel, wherein the non-primary channel is an NPCA primary channel.

3. The device of claim 2, wherein the NPCA primary channel is immediately adjacent to a channel occupied by the transmission from the OBSS.

4. The device of claim 2 or claim 3, wherein the processing circuitry is further configured to defer a transmission on the NPCA primary channel based on an energy detection measurement performed on the NPCA primary channel.

5. The device of claim 4, wherein the energy detection measurement is performed using a predetermined energy detection, ED, threshold for a clear channel assessment, CCA, wherein the predetermined ED threshold is a baseline threshold applicable to non-NPCA transmissions.

6. The device of claim 4, wherein the processing circuitry is further configured to defer the transmission on the NPCA primary channel if detected energy exceeds a lowered ED threshold that is lower than a baseline threshold applicable to non-NPCA transmissions.

7. The device of claim 6, wherein the lowered ED threshold is 5 dB or 10 dB lower than the baseline threshold.

8. The device of claim 3, wherein the NPCA primary channel comprises a plurality of 20MHz channels, and the processing circuitry is configured to check clear channel assessment, CCA, separately on each 20MHz channel that the device plans on using, including the 20MHz channel that is closest to the channel occupied by the transmission from the OBSS.

9. The device of claim 8, wherein the CCA is checked using a threshold of -62dBm or -72dBm.

10. The device of claim 3, wherein the processing circuitry is further configured to measure a received signal strength indicator, RSSI, of the transmission from the OBSS.

11. The device of claim 10, wherein the processing circuitry is further configured to calculate, based on the RSSI and a mask rejection value, whether the transmission from the OBSS is detectable with a predetermined ED threshold on the NPCA primary channel.

12. The device of claim 11, wherein if the transmission from the OBSS is calculated to not be detectable by the predetermined ED threshold, the processing circuitry is further configured to perform at least one of: prohibiting a transmission on a channel immediately adjacent to the channel occupied by the transmission from the OBSS or lowering a transmit power of a transmission on the NPCA primary channel.

13. The device of any one of claims 1 to 12, wherein the processing circuitry is further configured to prioritize channels with lower interference levels.

14. A non-transitory computer-readable medium storing computer-executable instructions which when executed by one or more processors result in performing operations comprising:
detecting energy on a non-primary channel to identify adjacent channel interference;
adjusting transmission parameters based on detected interference; and
enabling communication on available channels within a basic service set bandwidth.

15. A method comprising:
detecting energy on a non-primary channel to identify adjacent channel interference;
adjusting transmission parameters based on detected interference; and
enabling communication on available channels within a basic service set bandwidth.
